# EUROPÄISCHE PATENTSCHRIFT

(11) **EP 0 582 909 B1**
(45) Veröffentlichungstag und Bekanntmachung des Hinweises auf die Patenterteilung: **06.10.1999**
(21) Anmeldenummer: 93112156.0
(22) Anmeldetag: 29.07.1993
(51) Int. Cl.: C08G 63/676, C08L 67/06, C09D 167/06

(54) **Radikalisch härtbare Kompositionen und ihre Verwendung**
Radically hardenable compositions and their use
Compositions durcissables radicalairement et leur utilisation

(30) Priorität: 11.08.1992 DE 4226520
(43) Veröffentlichungstag der Anmeldung: 16.02.1994
(73) Patentinhaber: BAYER AG, 51368 Leverkusen (DE)
(72) Erfinder: Meixner, Jürgen, Dr., D-47803 Krefeld (DE); Fischer, Wolfgang, Dr., D-40668 Meerbusch (DE); Gupta, Pramod, Dr., D-50181 Bedburg (DE)

(56) Entgegenhaltungen:
- EP-A- 0 122 515

## Beschreibung

Die Erfindung betrifft neue, bei Raumtemperatur radikalisch härtbare Kompositionen auf Basis von olefinisch ungesättigten Polyestern und ihre Verwendung als oder zur Herstellung von Überzugsmitteln, Spachtel- oder Dichtmassen bzw. zur Herstellung von Formkörpern.

Die gebräuchlichen Bindemittel auf Basis ungesättigter Polyester enthalten α,β-ethylenisch ungesättigte Polyester und damit copolymerisierbare Monomere. Als Monomer wird fast ausschließlich Styrol eingesetzt. Während der Verarbeitung verdunstet Styrol, das die kostenspielige Reinigung der Luft der Fabrikationshallen und der Abluft der Trockenanlagen notwendig macht.

Außerdem wurde bereits versucht, olefinisch ungesättigte, der Härtung mit Metallsalzen von Sikkativsäuren und Hydroperoxid zugängliche Kompositionen zur Verfügung zu stellen, die sowohl (Meth)Acryloylgruppen aufweisende Verbindungen als auch teilacrylierte, mehrwertige Alkohole, deren nicht-veresterte Hydroxylgruppen durch (Meth)Allylalkohol oder Benzylalkohol verethert worden sind, enthalten (DE-OS 2 736 627). Für eine praktische Anwendung sind jedoch noch schnellere Härtungszeiten erforderlich bzw. wünschenswert, als sie mit diesen Systemen erreichbar sind.

Aus der DE-OS 33 19 013 sind (Meth)Acryloylgruppen enthaltende Di- oder Polyester auf Basis von (Meth)Acrylsäure und oxalkyliertem Buten-2-diol-1,4 bekannt, die durch Strahlenhärtung und auch durch Härtung mittels Metallsikkativen und Hydroperoxiden in vernetzbare Produkte überführt werden können. Bedingt durch ihre Herstellung durch Azeotrope Veresterung ist nur eine eingeschränkte Variation der Zusammensetzung und damit der Eigenschaften der daraus hergestellten Bindemittel möglich. Gleichzeitig ergeben sich Probleme durch nicht umgesetzte (Meth)Acrylsäure sowie durch niedermolekulare (Meth)Acrylsäureester, die durch Umesterung aus Bestandteilen des Polyesters entstehen können. Ein großer Nachteil derartiger Verbindungen ist bekanntlich deren Toxizität und Flüchtigkeit.

Aufgabe der Erfindung war es, durch (Hydro)-Peroxide auch bei Raumtemperatur radikalisch härtbare Systeme bereitzustellen, die sich zur Herstellung monomerenfreier, radikalisch härtbarer Überzugs- oder Spachtelmassen sowie Formkörper eignen und die gleichzeitig den Systemen des genannten Standes der Technik bezüglich der technischen Eigenschaften ebenbürtig sind, ohne deren Nachteile zu besitzen.

Überraschenderweise wurde nun gefunden, daß α,β-ethylenisch ungesättigte Polyester A) der nachstehend näher beschriebenen Art auf Basis von a) α,β-ethylenisch ungesättigten Dicarbonsäuren und/oder deren Anhydriden und b) oxalkyliertem Buten-2-diol-1,4 und insbesondere Gemische derartiger Polyester A) mit B) (Meth)Acryloylgruppen und/oder Vinylethergruppen aufweisenden Verbindungen den gestellten Anforderungen genügen. Sie können sowohl mittels Radikalbilder wie z.B. Peroxiden, aber auch durch Strahlenhärtung vernetzt werden.

Gegenstand der Erfindung sind bei Raumtemperatur radikalisch härtbare Kompositionen aus
A) 20 bis 80 Gew.-Teilen α,β-ethylenisch ungesättigter Polyester, die unter Einhaltung eines Äquivalentverhältnisses von Carboxylgruppen zu Hydroxylgruppen von höchstens 1:1 hergestellte Umsetzungsprodukte einer Dicarbonsäurekomponente a), bestehend zu 40 bis 100 Carboxyl-Äquivalent-% aus α,β-ethylenisch ungesättigten Dicarbonsäuren und/oder deren Anhydriden und zu 0 bis 60 Carboxyl-Äquivalent-% aus anderen, dieser Definition nicht entsprechenden Dicarbonsäuren und/oder deren Anhydriden, mit einer Alkoholkomponente b), bestehend zu 25. bis 100 Hydroxyl-Äquivalent-% aus oxalkyliertem Buten-2-diol-1,4 des mittleren Molekulargewichts 130 bis 400 und zu 0 bis 75 Hydroxyl-Äquivalent-% aus anderen ein- oder mehrwertigen Alkoholen des Molekulargewichtsbereichs 32 bis 400, darstellen, ausgewählt aus Ethylenglykol, Diethylenglykol Propylenglykol und einwertigen Alkoholen mit 1 bis 12 Kohlenstoffatomen
B) 20 bis 80 Gew.-Teilen ≥ 2 (Meth)Acryloylgruppen enthaltender Verbindungen gemäß Anspruch 1 und/oder Vinylethergruppen enthaltender Verbindungen,
   wobei die Summe der Gewichtsteile A) und B) 100 beträgt, sowie gegebenenfalls
C) aus der Technologie der ungesättigten Polye-sterharze bekannten Hilfs- und Zusatzmitteln,
   mit der Maßgabe, daß im Falle der Verwendung der Komponenten A) und B) in einem über 9:1 liegenden Gewichtsverhältnis die Komponente a) zumindest zu 90 Carboxyl-Äquivalent-% aus α,β-ethylenisch ungesättigten Dicarbonsäuren und die Komponente b) zumindest zu 40 Hydroxyl-Äquivalent-% aus oxalkyliertem Buten-2-diol-1,4 des mittleren Molekulargewichts 130 bis 400 bestehen.

Gegenstand der Erfindung ist auch die Verwendung dieser Kompositionen als Bindemittel für Überzugsmittel, Spachtel- oder Dichtmassen.

Gegenstand der Erfindung ist auch die Verwendung dieser Kompositionen zur Herstellung von Formkörpern.

Die wesentlichen Bindemittelkomponenten der erfindungsgemäßen Kompositionen bestehen somit entweder ausschließlich aus Polyestern A) oder, bevorzugt, aus Gemischen derartiger Polyester A) mit B) (Meth)Acryloylgruppen und/oder Vinylethergruppen aufweisenden Verbindungen.

Die Säurekomponente a), die zur Herstellung der ungesättigten Polyester A) eingesetzt wird, besteht zu 40 bis 100 Carboxyl-Äquivalent-% aus α,β-ethylenisch ungesättigten Dicarbonsäuren und/oder deren Anhydriden, mit der Maßgabe, daß bei Verwendung der Einzelkomponenten A) und B) in einem über 9:1 liegenden Gewichtsverhältnis und insbesondere bei ausschließlicher Verwendung von ungesättigten Polyestern A) und Verzicht auf Komponenten B) die Säurekomponente a) zumindest zu 90 Carboxyl-Äquivalent-%, vorzugsweise ausschließlich aus α,β-ungesättigten Dicarbonsäuren bzw. deren Anhydriden besteht. Bevorzugte α,β-ethylenisch ungesättigte Dicarbonsäuren bzw. Dicarbonsäureanhydride sind solche mit 4 bis 5 Kohlenstoffatomen wie Maleinsäure, Fumarsäure, Itaconsäure oder Maleinsäureanhydrid. Fumarsäure, Maleinsäure und/oder Maleinsäureanhydrid werden bevorzugt. Fumarsäure ist besonders bevorzugt.

Die Säurekomponente a) kann neben den beispielhaft genannten α,β-olefinisch ungesättigten Dicarbonsäuren bzw. deren Anhydride bis zu 60 Carboxyl-Äquivalent-% an anderen, der gemachten Definition nicht entsprechenden Dicarbonsäuren oder Dicarbonsäureanhydride enthalten. Hierzu gehören insbesondere gesättigte aliphatische Dicarbonsäuren mit 4 bis 10 Kohlenstoffatomen wie beispielsweise Bernsteinsäure, Adipinsäure, Sebacinsäure und/oder die Anhydride derartiger Säuren, cycloaliphatische Dicarbonsäuren oder Dicarbonsäureanhydride mit 8 bis 10 Kohlenstoffatomen wie beispielsweise Tetrahydrophthalsäure, Hexahydrophthalsäure, Norbornendicarbonsäure oder deren Anhydride und aromatische Dicarbonsäuren oder Dicarbonsäureanhydride mit 8 bis 12 Kohlenstoffatomen wie beispielsweise Phthalsäure, Phthalsäureanhydrid, Isophthalsäure oder Terephthalsäure, wobei unter den aromatischen Dicarbonsäuren bzw. Anhydriden Phthalsäure bzw. Phthalsäureanhydrid bevorzugt sind.

Die den Polyestern A) zugrundeliegende Alkoholkomponente b) besteht zu 25 bis 100 Hydroxyl-Äquivalent-% aus oxalkyliertem Buten-2-diol-1,4 des mittleren Molekulargewichts 130 bis 400 und zum Rest aus anderen, dieser Definition nicht entsprechenden ein-oder mehrwertigen Alkoholen des Molekulargewichtsbereichs 32 bis 400, ausgewählt aus den in Anspruch 1 genannten Alkoholen mit der Maßgabe, daß in erfindungsgemäßen Kompositionen, in denen das Gewichtsverhältnis von A) zu B) über 9:1 liegt, die Komponente b) zumindest zu 40 Hydroxyl-Äquivalent-% aus oxalkyliertem Buten-2-diol-1,4 besteht.

Der Ausdruck "oxalkyliert" bezieht sich auf den Umstand, daß es sich bei diesen Diolen um die Anlagerungsprodukte von Ethylenoxid und/oder Propylenoxid an Buten-2-diol-1,4 handelt. Bei den erfindungsgemäß zum Einsatz gelangenden "oxalkylierten" Buten-2-diol-1,4 handelt es sich um 1-bis 5-fach, vorzugsweise 2- bis 4-fach oxalkylierte Verbindungen, d.h. um Ethergruppen aufweisende Anlagerungsprodukte, bei deren Herstellung im statistischen Mittel pro Mol Butendiol 1 bis 5, vorzugsweise 2 bis 4 Mol Alkylenoxid zum Einsatz gelangten. Besonders bevorzugt handelt es sich bei den alkoxylierten Butendiolen um 2-bis 4-fach ethoxyliertes oder um 2-bis 4-fach propoxyliertes Buten-2-diol-1,4. Da bei der Alkoxylierung stets Homologengemische entstehen, beziehen sich die Molekulargewichtsangaben auf das mittlere, aus OH-Funktionalität und OH-Gehalt errechnete Molekulargewicht.

Andere, dieser Definition nicht entsprechende Alkohole, die als Teil der Alkoholkomponente b) in Betracht kommen sind zweiwertige, gegebenenfalls Ethergruppen aufweisende Alkohole mit 2 bis 4 Kohlenstottatomen ausgewählt aus Ethylenglykol, Diethylenglykol, oder Propylenglykol und einwertige Alkohole mit 1 bis 12 Kohlenstoffatomen wie beispielsweise Methanol, Ethanol, n-Hexanol, Isooctanol, Isododecanol oder Benzylalkohol.

Bei der Herstellung der Polyester A) kommen die Carboxylkomponente a) und die Alkoholkomponente b) in solchen Mengen zum Einsatz, die einem Äquivalentverhältnis von Carboxylgruppen zu Hydroxylgruppen von höchstens 1:1, vorzugsweise von 0,6:1 bis 1:1 entsprechen.

Die Herstellung der ungesättigten Polyester kann nach bekannten Methoden, z.B. durch Schmelzveresterung der Alkohole und Säuren oder deren veresterungsfähigen Derivate erfolgen, vgl. "Methoden der organischen Chemie" (Houben-Weyl), 4. Aufl. Bd. 14/2, Georg Thieme Verlag, Stuttgart 1961, S. 1-5, 21-33, 40-44.

Vorzugsweise erfolgt die Veresterung unter Inertgasatmosphäre bei Temperaturen von 140 bis 220°C.

Die ungesättigten Polyester A) weisen Säurezahlen von 0 bis 50, vorzugsweise 5 bis 40, Hydroxylzahlen von 10 bis 150, vorzugsweise 10 bis 130 mg KOH/g auf. Das als Zahlenmittel mit Hilfe der Gelpermeationschromatographie unter Verwendung von Polystyrol als Standard ermittelte Molekulargewicht der Polyester A) liegt bei 300 bis 5000, vorzugsweise 400 bis 4000.

Um die ungesättigten Polyester A) vor unerwünschter vorzeitiger Vernetzung zu bewahren, empfiehlt es sich, bereits bei der Herstellung der Ester 0,001 bis 0,1 Gew.-% Polymerisationsinhibitoren oder Antioxidantien zuzusetzen. Geeignete Stabilisatoren sind in "Methoden der organischen Chemie" (Houben-Weyl), 4. Aufl. Bd. 14/1, S. 433 ff. Georg Thieme Verlag, Stuttgart 1961, beschrieben. Sehr gut geeignet ist z.B. Toluhydrochinon in einer Konzentration von 0,01 bis 0,05 Gew.-%, bezogen auf erfindungsgemäß zu verwendende, ungesättigte Polyester. Verbindungen B) können die gemäß Anspruch 1 definierten (Meth)Acryloylgruppen und/oder Vinylethergruppen enthaltenden Verbindungen sein.

Bei den (Meth)Acryloylgruppen enthaltenden Verbindungen handelt es sich um allgemein bekannte Polyester-, Polyether-, Epoxy- oder Urethan(meth)acrylate oder um deren Mischungen, wie sie z.B. in s.p. Pappas "UV-Curing: Science and Technology" I + II Technology Marketing Corporation, Stamford Connecticut, 1978 und 1985 oder in R. Holman, P. Oldring (Hrsg.) "UV + EB Curing Formulations for Printing Inks, Coatings and Paints", Sita Technology, London 1988 beschrieben sind. (Meth)Acryloylgruppen enthaltende Verbindungen sind niederviskose, pro Molekül mindestens zwei Acrylatoder Methacrylatgruppen aufweisende Verbindung des Molekulargewichtsbereichs 170 bis 1000 wie beispielsweise die Bis-Acrylsäure- oder Methacrylsäureester von Ethylenglykol, 1,4-Butandiol, 1,6-Hexandiol, die TrisAcrylsäure- oder Methacrylsäureester von Glycerin, Trimethylolpropan, Pentaerythrit, die Tetrakis-acrylsäure- oder methacrylsäureester von Pentaerythrit oder die entsprechenden Acrylsäure- bzw. Methacrylsäureester des genannten Molekulargewichtsbereichs der diesen mehrwertigen Alkoholen entsprechenden Polyetheralkohole, wie sie in an sich bekannter Weise durch Alkoxylierung unter Verwendung von Propylenoxid und/oder Ethylenoxid der genannten Ethergruppen-freien mehrwertigen Alkohole erhalten werden können.

Geeignete Vinylethergruppen enthaltende Verbindungen sind vor allem pro Molekül eine oder zwei Vinylgruppen aufweisende Ether des Molekulargewichtsbereichs 72 bis 500 wie beispielsweise Vinylisobutylether, Cyclohexylvinylether, 1,4-Butandiol-divinylether, Triethylenglykoldivinylether oder 1,4-Bis-hydroxymethyl-cyclohexan-divinylether.

Je nach angestrebtem Verwendungszweck und in Abhängigkeit von der Viskosität können die erfindungsgemäßen Kompositionen vor der Formgebung mit Hilfs- und Zusatzmitteln C) der unterschiedlichsten Art abgemischt werden. Hierzu gehören Füllstoffe, Pigmente, Farbstoffe, Thixotropiermittel, Glättmittel, Mattierungsmittel oder Verlaufsmittel, die in den üblichen Mengen eingesetzt werden können. Insbesondere zur Herstellung von Lacküberzügen können die erfindungsgemäßen Kompositionen auch in Form von Lösungen in an sich bekannten Lacklösungsmitteln zum Einsatz gelangen. Beispiele für geeignete Lösungsmittel sind Aceton, Butylacetat oder Xylol.

Diese Lösungsmittel können in Mengen von jeweils bis zu 70 Gew.-%, vorzugsweise bis zu 60 Gew.-%, bezogen auf das Gesamtgewicht der erfindungsgemäßen Kompositionen, inclusive Lösungsmittel, eingesetzt werden.

Die Aushärtung der erfindungsgemäßen Kompositionen erfolgt, gegebenenfalls nach Verdunsten von flüchtigen Hilfsmitteln wie inerte Lösungsmittel, entwedar mittels energiereicher Strahlung, wie UV-Licht, Elektronen- oder Gammastrahlen oder durch Härtung mit Sikkativen, gegebenenfalls in Kombination mit (Hydro)Peroxiden, welche Hilfsmittel ebenfalls der Komponente C) zuzurechnen sind, bei Temperaturen zwischen Raumtemperatur und 250°C.

Die gegebenenfalls eingesetzten Sikkative sind z.B. Cobalt-, Blei- oder Mangansalze von Säuren wie Leinölfettsäure, Naphthensäure, Essigsäure oder Isooctansäure.

Sie werden, falls überhaupt, im allgemeinen in solchen Mengen eingesetzt, daß der Metallgehalt, bezogen auf das Gewicht der erfindungsgemäßen Produkte, 0,001 bis 1 Gew.-% entspricht.

Als (Hydro)Peroxide seien beispielhaft genannt: Dicumylperoxid, Di-tert.-butylperoxid, Benzoylperoxid, Cyclohexanonperoxid, Methylethylketonperoxid, Acetylacetonperoxid, Dinonylperoxid, Bis-(4-tert.-butylcyclohexyl)-peroxydicarbonat, tert.-Butylhydroperoxid, 2,5-Dimethylhexan-2,5-hydroperoxid und Diisopropyl-benzolmonohydroperoxid. Vorzugsweise werden diese (Hydro)Peroxide in Mengen von 0,5 bis 10 Gew.-%, bezogen auf das Gewicht der erfindungsgemäßen Kompositionen eingesetzt.

Der Zusatz anderer Verbindungen, die durch Bildung von Radikalen eine Vernetzungsreaktion starten können, ist ebenfalls möglich. Gleichfalls ist es möglich, eine Kombination aus einer durch (Hydro)-Peroxide gestarteten und einer durch energiereicher Strahlung erfolgten Vernetzung durchzuführen, um z.B. eine deckend pigmentierte Beschichtung nach DE-OS 36 12 422 zu erhalten.

Im Falle der Vernetzung mittels UV-Bestrahlung ist es notwendig, den Überzugsmassen als Komponente C) oder als Teil der Komponente C) Fotoinitiatoren hinzuzufügen.

Als Fotoinitiatoren sind die üblicherweise eingesetzten Verbindungen geeignet, wie sie z.B. in Houben-Weyl, Methoden der organischen Chemie, Band E 20, Seite 80 ff, Georg Thieme Verlag, Stuttgart 1987, beschrieben sind.

Gut geeignet sind z.B. Benzoinether wie Benzoinisopropylether, Benzilketale, wie z.B. Benzildimethylketal und Hydroxyalkylphenone, wie z.B. 2-Hydroxy-2-methyl-1-phenyl-1-propan-1-on.

Die erwähnten Fotoinitiatoren, die je nach Verwendungszweck der erfindungsgemäßen Produkte in Mengen zwischen 0,1 bis 10 Gew.-%, vorzugsweise 0,1 bis 5 Gew.-%, bezogen auf das Gewicht der erfindungsgemäßen Produkte, eingesetzt werden, können als einzelne Substanz oder, wegen häufiger vorteilhafter synergistischer Effekte, auch in Kombination miteinander verwendet werden.

Die erfindungsgemäßen Kompositionen stellen im allgemeinen klare, niedrig- bis hochviskose Flüssigkeiten dar. Die Überführung in ausgehärtete Kunststoffe erfolgt im allgemeinen nach vorangegangener Formgebung.

Der Begriff "Formgebung" soll im Rahmen der Erfindung sowohl die Herstellung beliebiger dreidimensionaler, ausgehärteter Formkörper als auch ausgehärteter Kitte oder Spachtelmassen oder Flächengebilde, insbesondere ausgehärteter Lacküberzüge umfassen. Besonders bevorzugt werden die erfindungsgemäßen Kompositionen als Lackbindemittel zur Herstellung von Lacküberzügen auf beispielsweise Papier, Kartonage, Leder, Holz, Kunststoffe, Vlies, Textilien, keramische Materialien, mineralische Materialien, Glas, Metall, Kunstleder und als Bindemittel für Spachtel- und Dichtmassen eingesetzt.

Die nachfolgenden Beispiele dienen der weiteren Erläuterung der Erfindung. Alle Prozentangaben beziehen sich auf Gewichtsprozente.

### Beispiele

### Ungesättigte Polyesterharze A

Die in der nachfolgenden Tabelle 1 aufgeführten Ausgangskomponenten werden zusammen mit 0,02 % Toluhydrochinon bei 160 bis 180°C unter einem Stickstoffstrom der Schmelzkondensation unterworfen, bis die angegebene Säurezahl und Viskosität erreicht ist.

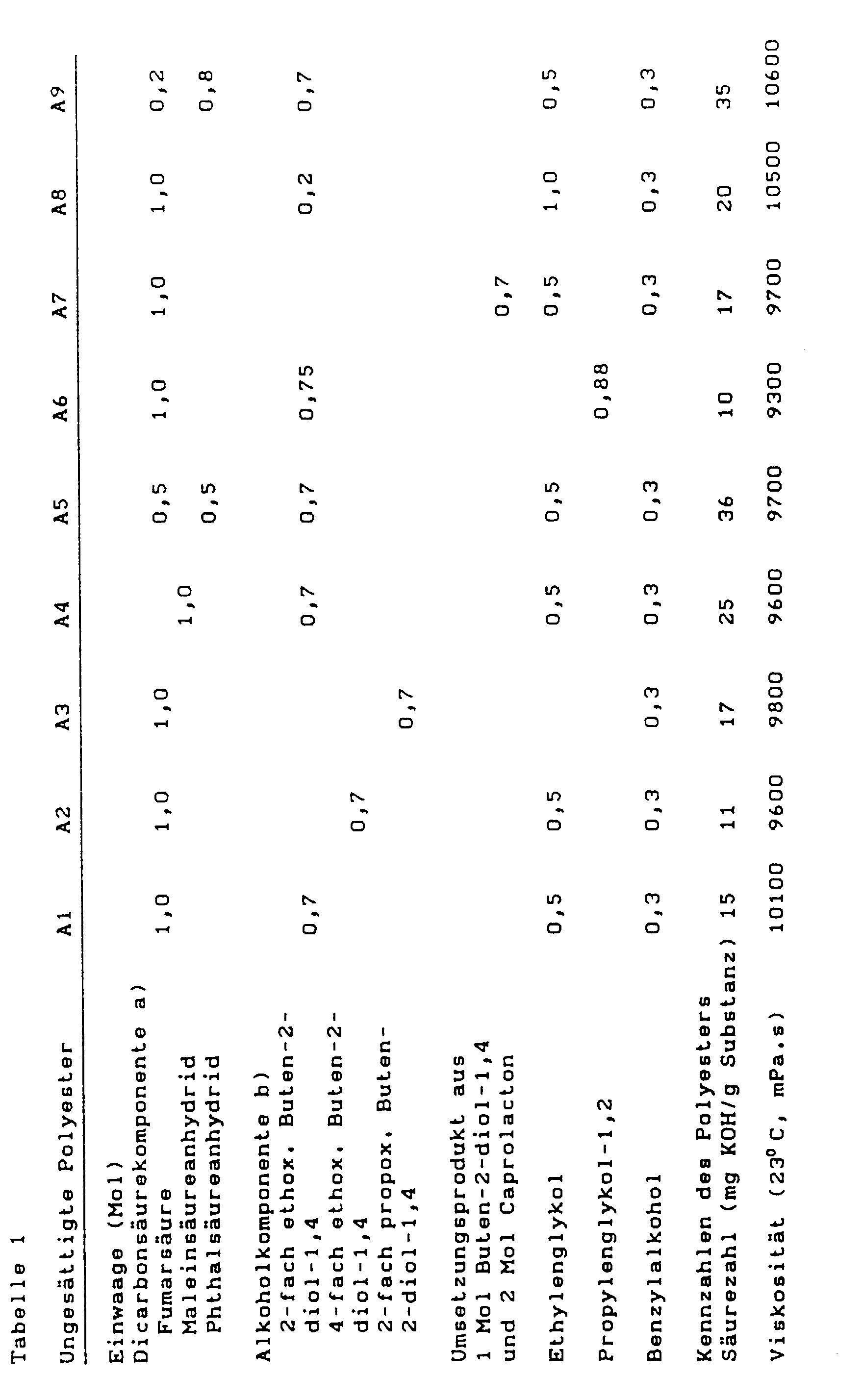

### Erfindungsgemäße Beispiele 1 bis 10

Die in Tabelle 2 aufgeführten Komponenten A) und B) werden gemischt, jeweils mit 3 % Methylethylketonperoxid und 2 % Kobaltisooctoatlösung (2,2 % Metallgehalt) versetzt, auf Glasplatten (90 µm Schichtstärke) aufgerakelt und bei Raumtemperatur getrocknet. Nach 4 Stunden werden klebfreie Lackfilme mit belastbaren Filmoberflächen erhalten.

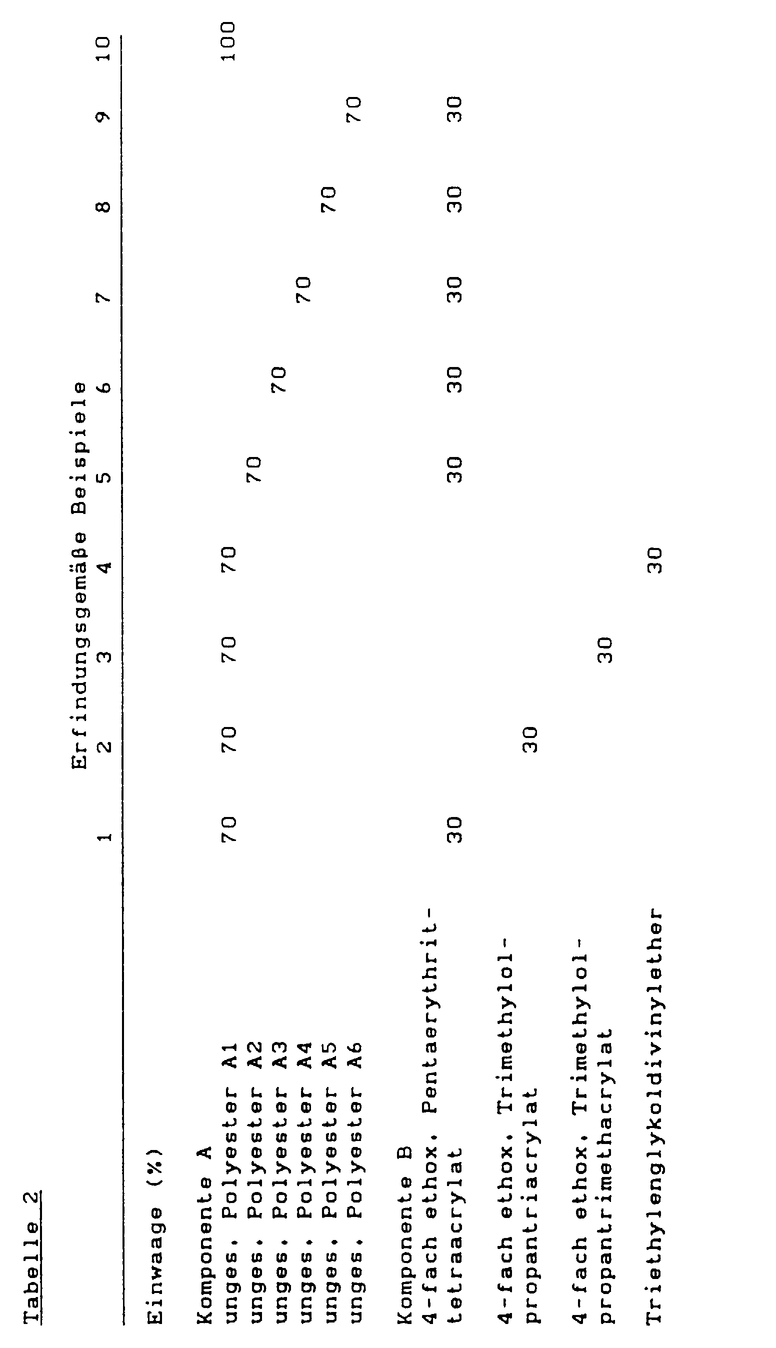

### Vergleichsbeispiele 11 bis 15

Die in Tabelle 3 aufgeführten Komponenten A) und B) werden gemischt, jeweils mit 3 % Methylethylketonperoxid und 2 % Kobaltoctoatlösung (2,2 % Metallgehalt) versetzt und auf Glasplatten (90 µm Schichtstärke) aufgerakelt. Im Gegensatz zu den erfindungsgemäßen Beispielen sind die Lackfilme nach 4 Stunden noch klebrig bis naß.

**Tabelle 3**

| | Vergleichsbeispiele | | | | |
|---|---|---|---|---|---|
| | 11 | 12 | 13 | 14 | 15 |
| Einwaage (%) | | | | | |
| Komponente A | | | | | |
| unges. Polyester A5 | 100 | | | | |
| unges. Polyester A7 | | 70 | | | |
| unges. Polyester A8 | | | 70 | | |
| unges. Polyester A9 | | | | 70 | |

| Komponente B | | | | | |
|---|---|---|---|---|---|
| 4-fach ethox. Pentaerythrittetraacrylat | - | 30 | 30 | 30 | 100 |

Vergleichsbeispiel 11 zeigt, daß bei Verwendung eines Polyesters A, dessen Säurekomponente a) aus weniger als 90 Carboxyl-Äquivalent-% aus α,β-ungesättigten Dicarbonsäuren besteht, auf die Mitverwendung von Komponente B) nicht verzichtet werden kann.

Vergleichsbeispiel 12 mit einem Polyester, der kein Umsetzungsprodukt von Buten-2-diol-1,4 mit Ethylen- oder Propylenoxid, sondern ein Umsetzungsprodukt aus Buten-2-diol-1,4 mit Caprolacton enthält, ergibt ebenfalls kein verwendbares Material.

In den Polyestern der Vergleichsbeispiele 13 und 14 werden weniger als die erfindungsgemäßen Mengen an alkoxylierten Buten-2-diol-1,4 bzw. an α,β-ethylenisch ungesättigten Dicarbonsäuren eingesetzt.

Vergleichsbeispiel 15 zeigt, daß Komponente B) alleine unter diesen Bedingungen nicht geeignet ist.

## Patentansprüche

1. Bei Raumtemperatur radikalisch härtbare Kompositionen aus
A) 20 bis 80 Gew.-Teilen α,β-ethylenisch ungesättigter Polyester, die unter Einhaltung eines Äquivalentverhältnisses von Carboxylgruppen zu Hydroxylgruppen von höchstens 1:1 hergestellte Umsetzungsprodukte einer Di-carbonsäurekomponente a), bestehend zu 40 bis 100 Carboxyl-Äquivalent-% aus α,β-ethylenisch ungesättigten Dicarbonsäuren und/oder deren Anhydriden und zu 0 bis 60 Carboxyl-Äquivalent-% aus anderen, dieser Definition nicht entsprechenden Dicarbonsäuren und/oder deren Anhydriden, mit einer Alkoholkomponente b), bestehend zu 25 bis 100 Hydroxyl-Äquivalent-% aus oxalkyliertem Buten-2-diol-1,4 des mittleren Molekulargewichts 130 bis 400 und zu 0 bis 75-Hydroxyl-Äquivalent-% aus anderen ein- oder mehrwertigen Alkoholen des Molekulargewichtsbereichs 32 bis 400, darstellen ausgewählt aus Ethylenglykol, Diethylenglykol, Propylenglykol und einwertigen Alkoholen mit 1 bis 12 Kohlenstoffatomen,
B) 20 bis 80 Gew.-Teilen ≥ 2 (Meth)Acryloylgruppen enthaltender Verbindungen des Molekulargewichts bereichs 170-1000 und/oder Vinylethergruppen enthaltender Verbindungen,
wobei die Summe der Gewichtsteile A) und B) 100 beträgt, sowie gegebenenfalls
C) aus der Technologie der ungesättigten Polyesterharze bekannten Hilfs- und Zusatzmitteln,
mit der Maßgabe, daß im Falle der Verwendung der Komponenten A) und B) in einem über 9:1 liegenden Gewichtsverhältnis die Komponente a) zumindest zu 90 Carboxyl-Äquivalent-% aus α,β-ethylenisch ungesättigten Dicarbonsäuren und die Komponente b) zumindest zu 40 Hydroxyl-Äquivalent-% aus oxalkyliertem Buten-2-diol-1,4 des mittleren Molekulargewichts 130 bis 400 bestehen.

2. Kompositionen gemäß Anspruch 1, dadurch gekennzeichnet, daß es sich bei den ungesättigten Polyesterharzen A) um solche handelt, die als ungesättigte Dicarbonsäure Fumarsäure in über Estergruppen eingebauter Form enthalten.

3. Verwendung der Kompositionen gemäß Anspruch 1 und 2 als Bindemittel für Überzugsmittel, Spachtel- oder Dichtmassen.

4. Verwendung der Kompositionen gemäß Anspruch 1 bis 3 zur Herstellung von Formkörpern.

## Claims

1. Compositions which are free-radically curable at room temperature, consisting of
A) 20 to 80 parts by weight of α,β-ethylenically unsaturated polyesters which are the reaction products, produced by maintaining an equivalent ratio of carboxyl groups to hydroxyl groups of no more than 1:1, of a dicarboxylic acid component a) consisting of 40 to 100 carboxyl-equivalent % of α,β-ethylenically unsaturated dicarboxylic acids and/or their anhydrides and 0 to 60 carboxyl-equivalent % of other dicarboxylic acids and/or their anhydrides not conforming to this definition, with an alcohol component b) consisting of 25 to 100 hydroxyl-equivalent % of alkoxylated 2-butene-1,4-diol of average molecular weight 130 to 400 and 0 to 75 hydroxyl-equivalent % of other mono- or polyhydric alcohols in the molecular weight range 32 to 400, selected from ethylene glycol, diethylene glycol, propylene glycol and monohydric alcohols with 1 to 12 carbon atoms,
B) 20 to 80 parts by weight of compounds in the molecular weight range 170 - 1000 containing ≥2 (meth)acryloyl groups and/or compounds containing vinyl ether groups,
wherein the sum of the parts by weight of A) and B) is 100, as well as optionally
C) auxiliary substances and additives known from unsaturated polyester resins technology,
with the proviso that, if components A) and B) are used in a weight ratio exceeding 9:1, component a) contains at least 90 carboxyl-equivalent % of α,β-ethylenically unsaturated dicarboxylic acids and component b) at least 40 hydroxyl-equivalent % of alkoxylated 2-butene-1,4-diol of average molecular weight 130 to 400.

2. Compositions according to claim 1, characterized in that the unsaturated polyester resins A) contain, as an unsaturated dicarboxylic acid, fumaric acid in a form incorporated via ester groups.

3. Use of the compositions according to claim 1 and claim 2 as binders for coating agents, fillers or sealing compositions.

4. Use of the compositions according to claims 1 to 3 for the production of moulded articles.

## Revendications

1. Compositions durcissables par voie radicalaire à la température ambiante, constituées
A) à concurrence de 20 à 80 parties en poids, par des polyesters à insaturation éthylénique α,β qui représentent des produits réactionnels, préparés en maintenant un rapport d'équivalents des groupes carboxyle aux groupes hydroxyle au maximum de 1:1, d'un composant d'acide dicarboxylique a) constitué, à concurrence de 40 à 100 % d'équivalents carboxyle, par des acides dicarboxyliques à insaturation éthylénique α,β et/ou par leurs anhydrides et, à concurrence de 0 à 60 % d'équivalents carboxyle, par d'autres acides dicarboxyliques et/ou leurs anhydrides ne répondant pas à cette définition, avec un composant d'alcool b) constitué, à concurrence de 25 à 100 % d'équivalents hydroxyle, par du butène-2-diol-1,4 oxalkylé possédant un poids moléculaire moyen de 130 à 400 et, à concurrence de 0 à 75 % d'équivalents hydroxyle, par d'autres alcools monovalents ou polyvalents du domaine de poids moléculaire de 32 à 400, choisis parmi le groupe comprenant l'éthylèneglycol, le diéthylèneglycol, le propylèneglycol et des alcools monovalents contenant de 1 à 12 atomes de carbone,
B) à concurrence de 20 à 80 parties en poids, par des composés contenant ≥ 2 groupes (méth)acryloyle, du domaine de poids moléculaire de 170 à 1.000 et/ou par des composés contenant des groupes d'éthers vinyliques,
la somme des parties en poids A) et B) s'élevant à 100, et le cas échéant
C) par des adjuvants et des additifs connus d'après la technologie des résines de polyesters insaturées,
avec cette mesure que, lorsqu'on utilise les composants A) et B) dans un rapport pondéral supérieur à 9:1, le composant a) est constitué, au moins à concurrence de 90 % d'équivalents carboxyle, par des acides dicarboxyliques à insaturation éthylénique α,β et le composant b) est constitué, au moins à concurrence de 40 % d'équivalents hydroxyle, par du butène-2-diol-1,4 oxalkylé possédant un poids moléculaire moyen de 130 à 400.

2. Compositions selon la revendication 1, caractérisées en ce qu'il s'agit, en ce qui concerne les résines de polyesters insaturées A), de résines qui contiennent, à titre d'acide dicarboxylique insaturé, de l'acide fumarique sous forme incorporée via des groupes esters.

3. Utilisation des compositions selon les revendications 1 et 2 à titre de liants pour des agents de recouvrement, pour des matières de masticage ou d'étanchéification.

4. Utilisation des compositions selon les revendications 1 à 3 pour la fabrication de corps moulés.
